# NOUVEAU FASCICULE DE BREVET EUROPEEN

(11) **EP 0 156 665 B2**
(45) Date de publication et mention de la décision concernant l'opposition: **07.10.1998**
(45) Mention de la délivrance du brevet: 18.05.1988
(21) Numéro de dépôt: 85400236.7
(22) Date de dépôt: 13.02.1985
(51) Int. Cl.: C08G 18/42, C08G 18/10, C08G 18/66

(54) **Procédé pour améliorer la résistance à l'hydrolyse des élastomères d'uréthanne saturés, compositions pour la mise en oeuvre de ce procédé et produits obtenus**
Verfahren zur Verbesserung der Hydrolysebeständigkeit von gesättigten Urethan-Elastomeren, Zusammensetzungen zur Erledigung dieses Verfahrens sowieso hergestellte Produkte
Process for the modification of the hydrolysis resistance of saturated urethane elastomers, compositions for carrying out this process and products obtained

(30) Priorité: 23.02.1984 FR 8402741
(43) Date de publication de la demande: 02.10.1985
(73) Titulaire: WITCO, F-75008 Paris (FR)
(72) Inventeur: Vinches, Gérard, F-27400 Louviers (FR); Fiquet, Line, F-76100 Rouen (FR)
(74) Mandataire: Peuscet, Jacques

(56) Documents cités:
- GB-A- 1 458 069
- GB-A- 1 458 069
- US-A- 3 305 250
- US-A- 3 349 049
- US-A- 3 406 134
- US-A- 3 714 092
- US-A- 4 262 743
- US-A- 4 423 179
- J. Am. Oil Chem. Soc., Vol. 39 (1962), pp. 502-508
- Unilever-Emery NV : "Polyesters for polyurethane applications"
- Unilever-Emery NV : " Specifications and characteristics of Unilever-Emery industrial chemicals"

## Description

La présente invention se rapporte à un procédé pour améliorer la résistance à l'hydrolyse des élastomères d'uréthanne à base de résines polyester saturées, aux compositions pour la mise en oeuvre de ce procédé, ainsi qu'aux produits obtenus par ce procédé.

On prépare généralement ces élastomères d'uréthanne en faisant réagir un prépolymère, qui est le produit de réaction d'une résine polyester et d'un diisocyanate organique, sur un composé hydroxylé; ce composé hydroxylé consiste, soit en au moins un agent d'allongement de chaîne, soit en au moins une résine polyester en présence d'un tensio-actif et d'un catalyseur, soit en un mélange: agent(s) d'allongement de chaîne/résine(s) polyester/agent tensio-actif et catalyseur. Pour la préparation de la résine polyester, on utilise, de façon courante, des diacides carboxyliques comme l'acide adipique.

Il apparaît que, pour certaines applications, les élastomères d'uréthanne ainsi produits présentent une trop grande sensibilité à l'eau. C'est le cas en effet lorsque ces élastomères sont destinés à constituer des semelles de chaussures; c'est également le cas lorsqu'ils entrent dans la réalisation de pièces mécaniques devant présenter une bonne résistance à l'hydrolyse.

La société déposante a découvert qu'en remplaçant par des acides gras polymérisés une partie des diacides carboxyliques entrant habituellement dans la préparation des résines polyester (utilisées tant pour la préparation du composé hydroxylé que pour la préparation du prépolymère), la résistance à l'hydrolyse des élastomères d'uréthanne résultants était considérablement améliorée. Or, cette propriété des acides gras polymérisés n'était pas évidente pour l'homme de l'art qui analysait l'état antérieur de la technique.

On connaît en effet, par CA-A-987 827 (=US-A-3 714 092), un caoutchouc brut d'uréthanne vulcanisable conduisant à un produit élastomère vulcanisé présentant une excellente résistance à l'hydrolyse. Pour préparer ce caoutchouc brut d'uréthanne, on fait réagir un léger excès d'un diisocyanate organique avec un polyester-diol; ce polyester-diol est préparé à partir d'un mélange (acide azélaïque/ acide dimère en C₃₆) et d'un mélange (butane-diol-1,4/ polypropylèneglycol); on fait ensuite un allongement de la chaîne à l'aide d'un polyol du type α-allyl-éther de glycérol ou monoallyl-éther de triméthylolpropane. Ce caoutchouc brut peut alors être vulcanisé par la soufre, les groupements insaturés des polyols allongeurs de chaîne procurant la réticulation voulue lors de la vulcanisation.

Il est indiqué, dans le dernier paragraphe de la page 2 de ce brevet, que le caoutchouc brut d'uréthanne, décrit dans le brevet canadien anterieur n° 928 447 et préparé en faisant réagir un diisocyanate organique avec un polyester préparé à partir d'acide azélaïque et d'un mélange butane-diol-1,4/propylèneglycol, présentait déjà une très bonne résistance à l'hydrolyse et de bonnes propriétés à basse température, mais cristallisait légèrement lorsqu'il était exposé pendant longtemps à ces basses températures.

Il en résulte que le brevet canadien n° 987 827 n'incite pas du tout l'homme de l'art à introduire des acides gras polymérises dans les élastomère d'uréthanne du type de ceux qui font l'objet de la présente demande de brevet qui ne sont pas, quant à eux destinés à être vulcanisés, étant donné que la comparaison entre les deux caoutchoucs bruts d'uréthanne définis dans des brevets canadiens susmentionnés laisse entendre que l'introduction de l'acide dimère ne permet que de résoudre le problème de la cristallisation à basse température.

On connaît également par le brevet polonais n° 98 184 des résines polyester élastiques et résistant à l'hydrolyse. Des acides dimères entrent dans la préparation de ces résines et il est indiqué dans ce brevet polonais que ces acides dimères confèrent l'élasticité en association avec du polypropylèneglycol ou du polybutylèneglycol de poids moléculaire compris entre 900 et 3500. On ne pouvait donc déduire de ce document que l'utilisation d'acides gras polymérisés en quantités spécifiques dans la préparation des résines polyester servant elles-mêmes à la préparation des élastomères d'uréthanne conduirait à une amélioration très sensible de la résistance à l'hydrolyse de ces élastomères.

La même conclusion peut être faite à l'égard de nombreux documents de la littérature:
- le brevet allemand n° 2 904 184 indique que des polyesters, dans la préparation desquels entre de 1 à 30 % d'acides gras dimères, conduisent à des compositions de moulage qui présentent une plus grande résistance aux chocs;
- le brevet des Etats-Unis d'Amérique n° 4 155 889 mentionne l'accroissement de la flexibilité d'un polyester grâce à l'introduction d'acides dimères;
- le brevet des Etats-Unis d'Amérique n° 3 068 254 décrit des mousses flexibles de polyuréthanne préparées par réaction d'un composé contenant au moins deux groupes isocyanate et d'un polyester formé à partir de polyacides qui consistent uniquement en acides dimères et trimères et de diols contenant une pluralité de groupes éther, le choix de ces diols permettant d'abaisser la viscosité du polyester, cette viscosité élevée étant due à la présence des polyacides polymères;
- le brevet des Etats-Unis d'Amérique n° 3 264 236 décrit un polymère liquide qui consiste en un polyester dont les groupes hydroxyle terminaux ont été remplacés par des groupes isocyanate et qui est préparé à partir de diéthylèneglycol, et exclusivement des acides gras dimères et trimères comme polyacides. Ce polymère liquide est destiné à être mélange à un oxydant minéral et un agent de durcissement pour constituer un agent propulseur solide. Les acides gras dimères et trimères ont ici pour but, d'une part, d'éviter que les polymères liquides ainsi préparés aient tendance à absorber l'eau de l'atmosphère, l'eau absorbée réagissant avec les groupes isocyanate réduisant ainsi leur nombre disponible pour la réaction de durcissement, et, d'autre part, de diminuer la viscosité du mélange ainsi que la température à laquelle doit se produire le durcissement;
- le brevet des Etats-Unis d'Amérique n° 3 383 343 décrit un polyester destiné à être filé et obtenu par réaction d'au moins un polyméthylèneglycol et d'au moins un acide dicarboxylique aramatique et d'au moins un acide gras dimère qui représente de 55 à 65 % en poids du poids total des acides. Le rôle que peut jouer la présence des acides gras dimères n'est nullement évoqué;
- le brevet des Etats-Unis d'Amerique n° 3 106 537 décrit des matières plastiques cellulaires consistant en produits de réaction de résines alkyde et de polyisocyanates présentant des propriétés physiques supérieures à des températures élevées. Des acides dimères peuvent entrer dans la formulation des résines; toutefois, nulle part dans ce document, il n'est mis en évidence le rôle que peuvent jouer ces dimères dans le produit fini;
- le brevet des Etats-Unis d'Amérique n° 3 349 049 décrit un revêtement de polyuréthanne que l'on obtient en mélangeant une solution organique d'un composé polyfonctionnel contenant plusieurs groupes isocyanate libres et d'une solution organique d'un polyester à groupes hydroxyle terminaux dont les polyacides constitutifs comportent de 10 à 80 % en mole d'acides dimères lesquels sont utilisés pour améliorer notamment la résistance chimique, la résistance aux chocs, la flexibilité de ces films;
- le brevet des Etats-Unis d'Amérique n° 3 498 940 se rapporte à des polyester-uréthannes destinés à être mélangés à des résines phénoliques ou autres et à réagir avec ces dernières pour former des vernis stables à température élevée. Les acides gras dimères utilisés pour la préparation des polyesters sont supposés uniquement améliorer la flexibilité du polyester;
- le brevet des Etats-Unis d'Amérique n° 3 406 134 décrit des compositions de revêtement d'uréthanne durcissables à l'humidité, les revêtements résultants présentant une bonne résistance chimique et une bonne résistance à l'abrasion. Les dimères qui forment une partie des polyacides sont utilisés ici pour augmenter la résistance à l'abrasion de ces films.

En résumé, aucun des documents antérieurs précités ne suggère que la présence d'acides gras polymérisés, dans des proportions définies, est la cause d'une remarquable améloration de la résistance à l'hydrolyse des élastomères d'uréthanne saturés faisant l'objet de la présente invention.

En premier lieu, le présente invention a pour objet un procédé pour améliorer la résistance à l'hydrolyse d'un élastomère d'uréthanne saturé, ledit élastomère étant préparé par réaction d'un composé hydroxylé avec un prépolymère, le rapport en poids composé hydroxylé/prépopolymère étant compris entre 5/95 et 95/5, ledit composé hydroxylé consistant:
- soit en au moins un agent d'allongement de chaîne;
- soit en au moins une résine polyester saturée en présence d'additifs usuels;
- soit en un mélange d'au moins un agent d'allongement de chaîne et d'au moins une résine polyester saturée en présence d'additifs usuels,
chaque agent d'allongement de chaîne et chaque résine polyester renfermant au moins deux fonctions hydroxyle terminales, ledit prépolymère étant préparé par réaction d'au moins une résine polyester saturée renfermant au moins deux fonctions hydroxyle terminales et d'au moins un isocyanate organique de fonctionnalité au moins égale à 2, le (ou les) isocyanate(s) étant en excès molaire par rapport à la (ou aux) résine(s) polyester, chacune des résines polyester étant préparée par réaction d'au moins un polyacide sur au moins un polyol, caractérisé par le fait que l'on remplace, pour le préparation d'au moins une des résines polyester, une fraction du (ou des) polyacide(s) par au moins un acide gras polymérisé essentiellement constitué d'un mélange de dimère et de trimère contenant 4 à 25% en poids de trimère, la charge initiale totale en acide(s) gras polymérisé(s) étant comprise entre 4 et 25% en poids, ces pourcentages étant ramenés au produit fini.

Les acides gras polymérisés, responsables de l'amélioration de la résistance à l'hydrolyse des élastomères d'uréthanne ainsi définis, peuvent, par conséquent, être utilisés dans la préparation du (ou des) polyesters entrant dans la formulation soit du composé hydroxylé, soit du prépolymère. On peut également des utiliser pour préparer au moins un polyester entrant dans la formulation du composé hydroxylé et, parallèlement, pour préparer au moins un polyester entrant dans la formulation du prépolymère.

Les polyols et les polyacides utilisés pour la préparation des résines polyester sont des polyols et polyacides saturés. L'introduction, conformément à la présente invention, des acides gras polymérisés obtenus à partir de polyacides insaturés introduit un taux résiduel d'insaturation; il en résulte que les élastomères d'uréthanne modifiés selon l'invention pourraient, quant à eux, être qualifiés de "sensiblement saturés".

On s'est aperçu qu'au-delà d'un taux de 35 % en poids d'acide(s) gras polymérisé(s), ce pourcentage étant ramené au produit fini, les résines polyester entrant dans la composition, tant du prépolymère que du composé hydroxylé, devenaient très visqueuses, ce qui conduisait à des difficultés pratiques de manipulation. De même, au-dessous d'un taux de 1 % en poids d'acide(s) gras polymérisé(s), ce pourcentage étant ramené au produit fini, la résistance à l'hydrolyse des élastomères d'uréthanne obtenus est peu significative.

On a par ailleurs constaté que les trimères jouent un rôle important dans l'amélioration de la résistance à l'hydrolyse des élastomères d'uréthanne présentement définis; ainsi, la société déposante s'est aperçu que, lorsqu'elle utilisait un acide gras polymérisé de type classique comportant à la fois des dimères et des trimères, la résistance à l'hydrolyse d'un même élastomère d'uréthanne augmente en règle générale au fur et a mesure que l'on augmente la proportion des trimères. Cependant, si, dans certains cas, l'homme de l'art pourra envisager d'introduire les trimères seuls, les trimères, qui engendrent un taux de réticulation plus important que les dimères et qui, de ce fait, peuvent accroître la viscosité des polyesters résultants, sont introduits conjointement avec les dimères, le taux en trimères étant de l'ordre de 4 à 25 % en poids. On utilisera notamment un acide gras polymérisé renfermant 80% en poids environ de dimère et 20 % en poids environ de trimère.

On choisit les acides gras polymérisés notamment dans le groupe constitué par les dimères et trimères de monoacides aliphatiques insaturés ayant de 8 à 24 atomes de carbone et leurs mélanges entre eux. On citera, par exemple, les dimères et trimères des mélanges d'acides oléique, linoléique et linolénique, et, en particulier, les acides gras dimérisé et trimérisé de l'acide oléique.

En pratique, on introduit les acides gras polymérisés sous la forme d'acides gras dimères et trimères qui sont obtenus par fractionnement d'acides gras polymérisés ou de mélanges d'acides gras polymérisés, et qui contiennent, en poids, moins de 1,5 % environ de monomères. En règle générale, ces acides gras polymérisés sont des mélanges de monomères dimères et trimères les monomères introduits de cette manière ne jouant aucun rôle dans l'amélioration de la résistance à l'hydrolyse des élastomères d'uréthanne résultants.

On utilise en particulier des acides gras polymérisés qui se présentent sous la forme d'une composition polymère qui est issue d'un mélange d'acides gras insaturés contenant en moyenne 18 atomes de carbone et qui renferme:
- de 0 à 1,5 % en poids de monomères;
- de 80 à 96 % en poids de dimères; et
- de 4 à 20 % en poids de trimères,
ces gammes de produits correspondant à des acides gras polymérisés généralement commercialisés sous la désignation d'"acides dimères".

Conformément à une autre caractéristique du procédé selon la présente invention, on choisit, de préférence, un rapport en poids composé hydroxylé/prépolymère de l'ordre de 60/40.

Conformément à d'autres caractéristiques du procédé selon la présente invention, on met en oeuvre des résines polyester-saturées dont l'indice d'acide est inférieur à 2 et l'indice d'hydroxyle est compris entre environ 25 et 230; et on met en oeuvre un prépolymère dont la teneur en groupements isocyanate se situe entre 2 et 25 % en poids.

Le procédé selon l'invention pour obtenir les élastomères d'uréthanne sensiblement saturés résistant à l'hydrolyse peut être décrit plus en détail comme suit:

On prépare les résines polyester de la façon suivante:

On réalise, pour chaque préparation, la réaction de condensation, dans les proportions voulues, d'au moins un diacide carboxylique (ou un anhydride d'acide dicarboxylique monomère), éventuellement en combinaison avec un acide gras polymérisé, sur au moins un polyol, à une température de l'ordre de 200-250°C, avec utilisation d'un catalyseur classique d'estérification; la réaction d'estérification est poursuivie jusqu'à obtention d'au moins deux groupes hydroxyle par molécule de polyester et d'un indice d'acide inférieur à 2. De préférence, on poursuit la réaction jusqu'à obtention de deux groupes hydroxyle par molécule de polyester, et d'un indice d'acide compris entre 0,8 et 2.

Parmi les diacides carboxyliques utilisables, on citera l'acide succinique, l'acide glutarique, l'acide adipique et leurs mélanges. On mentionnera, en particulier, l'acide adipique et un mélange en poids d' "acides dicarboxyliques" comprenant 22 à 32 % d'acide adipique, 40 à 45 % d'acide glutarique et 28 à 33 % d'acide succinique. Parmi les anhydrides d'acides carboxylique, on mentionnera l'anhydride phtalique, l'anhydride-isophtalique et l'anhydride téréphtalique.

Parmi les polyols que l'on peut avantageusement utiliser, on citera, à titre d'exemples, les diols comme l'éthylèneglycol, les polyéthylèneglycols comme le diéthylèneglycol, le propylèneglycol, les polypropylèneglycols comme le dipropylèneglycol, le butanediol-1,4, l'hexane diol-1,6, le néopentylglycol; les triols comme le glycérol et le triméthylolpropane; et les polyols comme de pentaérythritol.

Les catalyseurs que l'on peut utiliser peuvent avantageusement être pris dans le groupe constitué par les titanates organiques, les acides alkylaryl - et alkylsulfoniques, les acides phosphoriques, les sels d'étain, etc... Les catalyaeurs peuvent être avantageusement présents dans le mélange réactionnel à une concentration comprise entre 0,004 % et 0,020 % en poids par rapport au poids du mélange réactionnel.

Le composé hydroxylé que l'on préfère est le mélange d'une (ou de plusieurs) résine(s) polyester préparée(s) de la façon que l'on vient d'indiquer avec un "mélange catalytique" constitué par au moins un allongeur de chaîne, au moins un tensio-actif et au moins un catalyseur. On utilise également d'une manière avantageuse un composé hydroxylé constitué uniquement d'un (ou de plusieurs) agent(s) d'allongement de chaîne.

Les allongeurs de chaîne sont avantageusement choisis dans le groupe constitué par les polyols de faible poids moléculaire, par exemple le monoéthylèneglycol, le butanediol-1,4, le triméthylolpropane ou le glycérol, les amines aromatiques comme la méthylène bis (chloro-2 aniline), la méthylène bis (dipropylaniline), la diéthyl-toluènediamine, le di-p-aminobenzoate de triméthylèneglycol, et les polyamines aliphatiques comme l'isophorone diamine.

Les tensio-actifs que l'on utilise sont avantageusement du type huiles minérales qui sont des mélanges d'hydrocarbures à structure naphténique et paraffinique, ou bien du type huiles siliconées.

Quant aux catalyseurs, ce sont avantageusement des catalyseurs de type aminés, par exemple le diaza-1,4 bicyclo-[2.2.2] octane.

Pour préparer le prépolymère, on fait réagir au moins une résine polyester du type précité dans la préparation de laquelle on a, le cas échéant, utilisé un acide gras polymérisé, et au moins un isocyanate qui a une fonctionnalité au moins égale à 2 et qui est notamment un isocyanate aliphatique comme l'hexaméthylène diisocyanate-1,6 ou bien un isocyanate aromatique comme le 4,4'-diphénylméthane diisocyanate ou le toluène diisocyanate.

Comme indiqué ci-dessus, la partie isocyanate est en excès molaire par rapport à la résine polyester (ou aux résines polyester) de façon à obtenir un prépolymère à terminaisons isocyanate pouvant réagir avec les composés hydroxylés pour obtenir un élastomère de polyuréthane.

La présente invention a également pour objet les compositions pour la mise en oeuvre du procédé précité ainsi que les élastomères obtenus par ce procéde.

Pour mieux faire comprendre l'objet de la présente invention, on va décrire maintenant, à titre purement illustratif et nullement limitatif, plusieurs examples d'élastomères d'uréthanne selon l'invention dont les propriétés mécaniques après hydrolyse sont comparées à celles d'un élastomère de référence pour la fabrication duquel on n'a pas utilisé d'acides gras polymérisé pour préparer la résine polyester mise en oeuvre.

### MODE OPERATOIRE GENERAL DE LA PREPARATION DES ELASTOMERES D'URETHANNE.

### A) Préparation d'une résine polyester

On charge un réacteur avec le mélange du (ou des) diacide(s) et du (ou des) polyol(s) utilisés. On chauffe et on agite sous l'atmosphère d'un gaz inerte qui peut être de l'azote ou bien un gaz contenant de 11 à 13 % en poids de gaz carbonique, de 2 à 3 % en poids d'oxyde de carbone et moins de 10 ppm d'oxygène. On introduit le catalyseur utilisé. L'eau formée au cours de la réaction distille vers 150°C pendant 1 à 4 heures et la température monte progressivement. On maintient la température à une valeur comprise entre 200 et 250°C jusqu'à obtention d'un indice d'acide inférieur à 2 et d'un indice d'hydroxyle (nombre de groupements OH) comprise entre 25 et 230. Le temps total de la réaction est de 15 à 30 heures.

Il est bien entendu que pour la préparation d'un même élastomère d'uréthanne, on peut utiliser conjointement plusieurs résines polyester.

### B) Préparation du composé hydroxylé (dans le cas où il consiste en un mélange: résine(s) polyester/allongeur(s) de chaîne/additifs usuels)

On charge dans un mélangeur la résine polyester ou le mélange de résines polyester dont la préparation a été indiquée au paragraphe A et on y ajoute le mélange catalytique constitué par le (ou les) allongeur(s) de chaîne, le (ou les) tensio-actif(s) et le (ou les) catalyseurs(s). Le (ou les) tensio-actif(s) est (ou sont) parfois préalablement mélangés à la résine polyester considérée, pour des raisons de solubilité. La teneur en eau du composé hydroxylé est contrôlée et ajustée selon le cas entre 0,06 et 0,50% en poids.

### C) Préparation du prépolymère

On chauffe dans un réacteur le (ou les) diisocyanate(s) utilisé(s) à une température comprise entre 40 et 80°C, puis on y ajoute le (ou les) résine(s) polyester préparée(s) comme indiqué au paragraphe A sous agitation. La température s'élève entre 80 et 110°C et on maintient cette température pendant un temps compris entre 1 et 6 heures. La teneur en groupements NCO est contrôlée et ajustée à une valeur comprise entre 2 et 25 % en poids.

### D) Préparation en continu de l'élastomère d'uréthanne

On charge le prépolymère préparé comme indiqué au paragraphe C et le composé hydroxylé préparé comme indiqué au paragraphe B, chacun dans une cuve de la machine et on les porte chacun à une température comprise entre 20 et 60°C. On règle les débits, d'une part, du prépolymère et, d'autre part, du composé hydroxylé qui doivent entrer en réaction, de façon à obtenir le rapport en poids composé hydroxylé/prépolymère désiré dans la tête de mélange de la machine. Ce rapport peut être compris entre 5/95 et 95/5; il est généralement de 60/40. Le mélange est coulé ou injecté à une température comprise entre 20 et 60°C dans un moule qui est immédiatement fermé.

### E) Mesure des propriétés mécaniques

Pour chaque lot d'élastomère d'uréthanne obtenu, on réalise, conformément à la norme DIN 53344, l'essai d'hydrolyse sur une éprouvette de ce lot, essai suivant lequel l'éprouvette en question est placée dans une enceinte pendant 7 jours à 70°C et à 100 % d'humidité relative (vapeurs saturantes d'eau). On mesure, pour chaque lot, les propriétés mécaniques sur une éprouvette prélevée avant hydrolyse et sur l'éprouvette obtenue après l'hydrolyse réalisée comme indiqué ci-dessus. Les propriétés méciniques étudiées sont notamment:
- résistance à l'abrasion selon la norme DIN 53516;
- allongement et charge à la rupture selon la norme ASTM T 412 die C (ou NF T 46002);
- résistance à la traction selon la norme ASTM T 412 die C (ou NF T 46002);
- résistance à la déchirure selon la norme ASTM T 1004 (ou NP T 46007);
- résistance à la flexion selon la méthode de ROSS FLEX.

En particulier, ce sont les résultats donnés par les essais de la charge à la rupture qui sont jugés les plus significatifs de la mesure des propriétés mécaniques; ainsi, pour qu'un élastomère d'uréthanne soit jugé performant, c'est-à-dire présente une résistance convenable à l'hydrolyse au sens de la présente invention, sa charge à la rupture doit être conservée à 50 % après hydrolyse ou bien elle doit présenter une valeur au moins égale à 5 MPa. Dans tous les exemples suivants, on a reporté uniquement les valeurs obtenues pour l'allongement et la charge à la rupture; les autres propriétés ont toutefois dans l'ensemble été conservées pour les élastomères conformes à la présente invention dans des proportions acceptables.

Pour illustrer l'amélioration de la résistance à l'hydrolyse que procure le procédé conforme à la présente invention, on a fabriqué un élastomère d'uréthanne de référence, qui fait l'objet de l'exemple comparatif ci-après et dont les résines polyester de base ont été réalisées sans avoir recours à des acides gras polymérisés, et on a également préparé plusieurs élastomères d'uréthanne conformes à la présente invention, qui font l'objet des exemples 1 à 10 ci-après et dont les résines polyester de base ont été réalisées avec incorporation d'acides gras polymérisés.

Dans ces exemples, tous les pourcentages indiqués pour les ingrédients s'entendent en poids; par ailleurs, les pourcentages, également donnés en poids, des acides gras polymérisés dans les élastomères d'urethanne sont des pourcentages ramenés aux produits finis.

### Exemples comparatifs

### A - 1 - Préparation de la résine polyester n° 1

On a utilisé, pour cette préparation, les ingrédients suivants:
- acide adipique 60,23%
- monoéthylèneglycol 18,47 %
- diéthylèneglycol 21,28 %
- catalyseur 0,02 %

L'indice d'acide doit être < 2 et l'indice d'hydroxyle doit être compris entre 50 et 60.

### 2- Préparation de la résine polyester n° 2

On a utilisé les ingrédients suivants:
- acide adipique 54,82 %
- diéthylèneglycol 42,62 %
- triméthylolpropane 2,54 %
- catalyseur 0,02 %

L'indice d'acide doit être <2 et le nombre d'hydroxyle doit être compris entre 50 et 60.

### 3 - Preparation de la résine polyester n° 3

On a utilisé les ingrédients suivants:
- acide adipique 62,46 %
- monoéthylèneglycol 21,85%
- diéthylèneglycol 4,13 %
- butanediol-1,4 11,52 %
- catalyseur 0,02 %

L'indice d'acide doit être <2 et le nombre d'hydroxyle doit être compris entre 50 et 60.

### B - Préparation du composé hydroxylé

On a utilisé les ingrédients suivants:
- résine polyester n° 1 79,60 %
- résine polyester n° 2 15,00 %
- monoéthylèneglycol 4,40 %
- diaza-1,4 bicyclo [2.2.2] octane 0,70 %
- tensio-actif consistant en une huile siliconée vendue sous la dénomination "DOW CORNING DC 193" par la Société "THE DOW CHEMICAL Co" 0,30 %

### C - Préparation du prépolymère

On utilise les ingrédients suivants:
- 4,4'-diphénylméthane diisocyanate 54,30 %
- résine polyester n° 3 45,70 %

La teneur en groupements NCO doit être égale à 16,25 % ± 0,15 % en poids.

### D - Préparation de l'élastomère d'uréthanne

On opère comme décrit au paragraphe D du mode opératoire général, le rapport composé hydroxylé/prépolymère étant de 61,7/38,3.

### E - Mesure des propriétés mécaniques avant et après hydrolyse

Les résultats obtenus sont indiqués dans le tableau suivant:

| | Avant Hydrolyse | Après Hydrolyse |
|---|---|---|
| Allongement à la rupture (%) | 600 | 450 |
| Charge à la rupture (MPa) | 11,0 | 2,3 |

On constate que la propriété mécanique de la charge à la rupture n'est conservée qu'à 20,9 % après hydrolyse, ce qui signifie une dégradation chimique de l'élastomère, démontrant ainsi une très faible résistance de cet élastomère d'uréthanne de référence.

### EXEMPLE 1

On a préparé un élastomère contenant 5,6 % d'acides gras polymérisés.

### A - 1 - Préparation d'une résine polyester n° 4

On a utilisé les ingrédients suivants:
- acide adipique 56,05 %
- "acides dimères" vendus sous la dénomination "PRIPOL 1014" par le Société "UNICHEMA" et constitués par 1 % de monomères, 95 % de dimères et 4 % de trimères 10,20 %
- monoéthylèneglycol 13,65 %
- butanediol-1,4 20,08 %
- catalyseur 0,02%

L'indice d'acide doit être <2 et le nombre d'hydroxyle doit être compris entre 50 et 60. La teneur en acides gras polymérisés de cette résine polyester est de 11,80% en poids.

### 2 - Préparation de la résine polyester n° 5

On utilise les ingrédients suivants:
- acide adipique 61,79 %
- monoéthylèneglycol 15,51 %
- butanediol-1,4 22,70 %
- catalyseur 0,02 %

L'indice d'acide doit être < 2 et le nombre l'hydroxyle doit être compris entre 50 et 60.

### B - Préparation du composé hydroxylé

On utilise pour cette préparation les ingrédients suivants:
- résine polyester n° 4 75,96 %
- résine polyester n° 2, telle que définie à l'exemple comparatif 15,00 %
- butanediol-1,4 8,10 %
- tensio-actif consistant en une huile minérale vendue sous la dénomination "PLASTIC OIL 263" par la Société "WITCO CHEMICAL" 0,40 %
- diaza-1,4 bicyclo [2.2.2] octane 0,50 %
- eau 0,04%

### C - Préparation du prépolymère

On utilise les ingrédients suivants:
- 4,4'-diphénylméthane diisocyanate présentant une teneur en groupement NCO de 33,6 ± 0,2 % 51,50 %
- 4,4'-diphénylméthane diisocyanate modifié par des carbodiimides, présentant une teneur en groupements NCO de 30 ± 1 % en poids 10,80 %
- résine polyester n° 5 37,70 %

La teneur en groupements NCO du prépolymère obtenu doit être égale à 19,2 ± 0,15 % en poids.

### D - Préparation de l'élastomère d'uréthanne

On opère comme indiqué au paragraphe D du mode opératoire général en utilisant un rapport en poids composé hydroxylé/prépolymère de 62,1/37,9.

### E - Mesure des propriétés mécaniques avant et après l'hydrolyse.

| | Avant hydrolyse | Après hydrolyse |
|---|---|---|
| Allongement à la rupture (%) | 500 | 650 |
| Charge à la rupture (MPa) | 11,1 | 7,5 |

On constate qu'après l'hydrolyse la charge à la rupture est conservée à raison de 67,6 %, ce qui est estimé largement satisfaisant pour indiquer que l'élastomère d'uréthanne ainsi obtenu présente une résistance tout à fait convenable à l'hydrolyse.

### EXEMPLE 2

On prépare un élastomère d'uréthanne contenant 5,2 % d'acides gras polymérisés.

### A - Préparation des résines polyester

On utilise la résine polyester n° 4 dont les constituants sont indiqués à l'exemple 1, ainsi que la résine polyester n° 2 dont les constituants sont indiqués à l'exemple comparatif.

### B - Préparation du composé hydroxylé

On utilise les ingrédients suivants:
- résine polyester n° 4 74,47 %
- résine polyester n° 2 14,71 %
- butanediol-1,4 9,90 %
- tensio-actif consistant en une huile minérale vendue sous la dénomination "PLASTIC OIL 263" par la Société "WITCO CHEMICAL" 0,39 %
- diaza-1,4 bicyclo [2.2.2]octane 0,49 %
- eau 0,04 %

### C - Préparation du prépolymère

On utilise le même prépolymère que celui préparé à l'exemple 1.

### D -Préparation de l'élastomère d'uréthanne

On procède comme indiqué au paragraphe D du mode opératoire général, le rapport en poids composé hydroxylé/prépolymère étant de 58,8/41,2.

### E - Propriétés mécaniques avant et après hydrolyse

| | Avant hydrolyse | Après hydrolyse |
|---|---|---|
| Allongement à la rupture (%) | 450 | 625 |
| Charge à la rupture (MPa) | 16,4 | 9,7 |

On constate que la charge à la rupture est après hydrolyse conservée à raison de 59,1 %, d'où il résulte que l'élastomère d'uréthanné ainsi préparé peut être estimé satisfaisant du point de vue de la conservation de sa résistance à l'hydrolyse.

### EXEMPLE 3

On prépare un élastomère d'uréthanne contenant 22,0 % d'acides gras polymérisés.

### A - Préparation des résines polyester

On utilise la résine polyester n° 2 telle que définie dans l'exemple comparatif ainsi que la résine polyester n° 6 définie ci-après:
- acide adipique 32,75 %
- "acides dimères" vendus sous la dénomination "PRIPOL 1022" par la Société "UNICHEMA" et composés de 80 % de dimères et de 20 % de trimères 40,00 %
- monoéthylèneglycol 12,75 %
- diéthylèneglycol 14,48 %
- catalyseur 0,02 %

L'indice d'acide doit être <2 et le nombre d'hydroxyle compris entre 50 et 60. La teneur en acides gras polymérisés de cette résine polyester est de 44,71 % en poids.

### B - Préparation du composé hydroxylé

On utilise les ingrédients suivants:
- résine polyester n° 6 79,60 %
- résine polyester n° 2 15,00 %
- tensio-actif consistant en une huile minérale vendue sous la dénomination "PLASTIC OIL 263" par la Société "WITCO CHEMICAL" 0,30 %
- monoéthylèneglycol. 4,40 %
- diaza-1,4 bicyclo [2.2.2] octane 0,70 %

### C - Préparation du prépolymère

On utilise les ingrédients suivants:
- 4,4'-diphénylméthane diisocyanate 54,30 %
- résine polyester n° 3 45,70 %

La teneur en groupements NCO doit être égale à 16,25 ± 0,15 % en poids.

### D - Préparation de l'élastomère d'uréthanne

On procède comme indiqué au paragraphe D du mode opératoire général avec un rapport composé hydroxylé/prépolymère de 61,7/38,3.

### E - Mesure des propriétés mécaniques avant et après hydrolyse

On a obtenu les résultats suivants:

| | Avant hydrolyse | Après hydrolyse |
|---|---|---|
| Allongement à la rupture (%) | 425 | 500 |
| Charge à la rupture (MPa) | 10,0 | 6,4 |

On constate que la charge à la rupture est conservée a raison de 64 % aprés l'hydrolyse, ce qui est estimé satisfaisant.

### EXEMPLE 4

On prépare un élastomère d'uréthanne contenant 21,7 % d'acides gras polymérisés.

### A - Préparation de la résine polyester

On prépare une résine polyester n° 7, à base des mêmes ingrédients que la résine polyester n° 6, mais dont les "acides dimères" consistant en une produit vendu sous la dénomination "HYSTRENE - 3680" par la Société "HUMKO" et présentant une composition de 1,5 % en monomères, 83 % en dimères et 15,5 %, en trimères, d'ou il résulte que la teneur en acides gras polymérisés de cette résine polyester n° 7 est de 44,1 % en poids.

### B - Préparation du composé hydroxylé

On utilise les ingrédients suivants:
- résine polyester n° 7 79,60 %
- résine polyester n°2 15,00 %
- monoéthylèneglycol 4,40 %
- tensio-actif consistant en une huile minérale vendue sous la dénomination "PLASTIC OIL 263" par la Société "WITCO CHEMICAL" 0,30 %
- diaza-1,4 bicyclo [2.2.2] octane 0,70%

### C - Préparation du prépolymère

On utilise les mêmes ingrédients que ceux indiqués à l'exemple 3.

### D - Préparation de l'élastomère

On procède comme indiqué au paragraphe D du mode opératoire général avec un rapport composé hydroxylé/prépolymère de 61,7/38,3.

### E - Mesure des propriétés mécaniques avant et après hydrolyse

On a obtenu des résultats suivants:

| | Avant hydrolyse | Après hydrolyse |
|---|---|---|
| Allongement à la rupture(%) | 425 | 650 |
| Charge à la rupture (MPa) | 7,9 | 6,1 |

On observe donc une conservation de 77,2 % de la charge à la rupture après l'hydrolyse, ce qui représente un résultat tout à fait satisfaisant.

### EXEMPLE 5

On prépare un élastomère d'uréthanne contenant 9,3 % en d'acides gras polymérisés.

### A - Préparation des résines polyester

### a) préparation de la résine polyester n°8

On utilise les ingrédients suivants:
- acide adipique 46,30 %
- "acides dimères" vendus sous la dénomination "PRIPOL 1022" par la Société "UNICHEMA" et composés de 80 % de dimères et de 20 % de trimères 20,00 %
- monoéthylèneglycol 15,80 %
- diéthylèneglycol 17,80 %
- catalyseur 0,02 %

L'indice d'acide doit être <2 et le nombre d'hydroxyle compris entre 50 et 60. La teneur en acides gras polymérisés de cette résine polyester est de 22,9 % en poids.

### b) préparation de la résine polyester n° 9

On utilise les ingrédients suivants:
- acide adipique 54,24 %
- diéthylèneglycol 42,49 %
- triméthylolpropane 3,25 %
- catalyseur 0,02 %

L'indice d'acide doit être <2 et le nombre d'hydroxyle compris entre 50 et 60.

### B - Préparation du composé hydroxylé

On utilise les ingrédients suivants:
- résine polyester n° 8 84,20 %
- monoéthylèneglycol 13,48 %
- phtalate d'isobutyle 1,00 %
- tensio-actif consistant en une huile siliconée vendue sous la dénomination "DOW CORNING DC 193" par la Société "THE DOW CHEMICAL" 0,40 %
- diaza-1,4 bicyclo [2.2.2] octane 0,45 %
- eau 0,47 %

### C - Préparation du prépolymère

On utilise les ingrédients suivants:
- 4,4'-diphénylméthane diisocyanate présentant une teneur en groupements NCO de 33,6 ± 0,2 % en poids 66,00 %
- 4,4'-diphénylméthane diisocyanate modifié par des carbodiimides et présentant une teneur en groupements NCC de 30 ± 1 % en poids 5,00 %
- résine polyester n° 9 29,00 %

La teneur en groupements NCO doit être égale à 22,15 ± 0,15 % en poids.

### D - Préparation de l'élastomère

On procède comme indiqué au paragraphe D du mode opératoire général avec un rapport composé hydroxylé/prépolymère de 48,1/51,9.

### E - Mesure des propriétés mécaniques avant et après hydrolyse

On a obtenu les résultats suivants:

| | Avant hydrolyse | Après hydrolyse |
|---|---|---|
| Allongement à la rupture (%) | 300 | 350 |
| Charge à la rupture (MPa) | 9,15 | 6,4 |

On observe donc une conservation de 69,9 % de la charge à la rupture après l'hydrolyse ce qui constitue un résultat tout-à-fait satisfaisant.

### EXEMPLE 6

On prépare un élastomère d'uréthanne renfermant 9,8 % en d'acides gras polymérisés.

### A - Préparation des résines polyester

### a) préparation de la résine polyester n° 10

On utilise les ingrédients suivants:
- acide adipique 47,22 %
- "acides dimères" vendus sous la dénomination "PRIPOL 1022" par la Société "UNICHEMA" et présentant une composition de 80 % en dimères et de 20 % en trimères 20,79 %
- monoéthylèneglycol 14,97 %
- diéthylèneglycol 17,00 %
- catalyseur 0,02 %

L'indice d'acide doit être <2 et le nombre d'hydroxyle compris entre 50 et 60. La teneur en acides gras polymérisés de cette résine polyester est de 23,87 % en poids.

### b) préparation de la résine polyester n°11

On utilise les ingrédients suivants:
- acide adipique 54,14 %
- diéthylèneglycol 45,84 %
- catalyseur 0,02 %

L'indice d'acide doit être <2 et le nombre d'hydroxyle compris entre 50 et 60.

### B - Préparation du composé hydroxylé

On utilise les ingrédients suivants:
- résine polyester n° 10 82,40 %
- monoéthyléneglycol 11,30 %
- phtalate d'isobutyle 5,00 %
- tensio-actif consistant en une huile siliconée vendue sous la dénomination "DOW CORNING DC 193" par la Société "THE DOW CHEMICAL" 0,40 %
- diaza-1,4 bicyclo [2.2.2] octane 0,55 %
- eau 0,35 %

### C - Préparation du prépolymère

On utilise les ingrédients suivants :
- 4,4'-diphénylméthane diisocyanate présentant une teneur en groupements NCO de 33,6 ± 0,2 % en poids 65,10 %
- résine polyester n°11 34,90 %

La teneur en groupements NCO doit être égal à 20,4 ± 0,15 % en poids.

### D - Préparation de l'élastomère

On procède comme indiqué au paragraphe D du mode opératoire général avec un rapport composé hydroxylé/polymère de 50/50.

### E - Mesure des proprietés mécaniques avant et après hydrolyse

On a obtenu les résultats suivants:

| | Avant hydrolyse | Après hydrolyse |
|---|---|---|
| Allongement à la rupture (%) | 400 | 450 |
| Charge à la rupture (MPa) | 9,15 | 5,85 |

On observe que la charge à la rupture est conservée à raison de 63,9 % après hydrolyse, ce qui est estimé tout à fait satisfaisant.

### EXEMPLE 7

On prépare un élastomère d'uréthanne contenant 12,0 % d'acides gras polymérisés.

### A - Préparation des résines polyester

On utilise une résine polyester identique à la résine polyester n° 2 telle que définie à l'exemple comparatif et on prépare la résine polyester n° 12 avec les ingrédients suivants:
- acide adipique 43,45 %
- anhydride phtalique 4,84 %
- acides dimères vendus sous la dénomination "PRIPOL 1022" par la Société "UNICHEMA" et présentant une composition de 80 % en dimères et de 20 % en trimère 19,30 %
- monoéthylèneglycol 15,16 %
- diéthylèneglycol 17,23 %
- catalyseur 0,02 %

L'indice d'acide doit être <2 et le nombre d'hydroxyle compris entre 50 et 60. La teneur en acides gras polymérisés de cette résine polyester est de 21,91 % en poids.

### B - Préparation du composé hydroxylé

On utilise les ingrédients suivants:
- résine polyester n° 12 89 57 %
- résine polyester n° 2 5,00 %
- monoéthylèneglycol 4,40 %
- tensio-actif consistant en une huile minérale vendue sous la dénomination "PLASTIC OIL 263" par la Société "WITCO" CHEMICAL 0,30 %
- diaza-1,2 bicyclo [2.2.2] octane 0,70%
- eau 0 03%

### C - Préparation du prépolymère

On utilise le même prépolymère que celui préparé à l'exemple 3.

### D - Préparation de l'élastomère d'uréthanne

On procède comme indiqué au paragraphe D du mode opératoire général avec un rapport composé hydroxylé/prépolymère de 61,3/38,7.

### E - Mesure des propriétés mécaniques avant et après hydrolyse

On a obtenu les résultats suivants:

| | Avant hydrolyse | Après hydrolyse |
|---|---|---|
| Allongement à la rupture (%) | 650 | 800 |
| Charge à la rupture (MPa) | 16,6 | 7,2 |

On constate par conséquent une conservation de 43,4 % de la charge à la rupture après l'hydrolyse, mais cette dernière reste supérieure à 5 MPa, d'où il résulte que l'élastomère d'uréthanne ainsi préparé est estimé présenter une résistance à l'hydrolyse convenable.

### EXAMPLE 8

On prépare un élastomère d'uréthanne contenant 10,5 % d'acides gras polymérisés.

### A - Préparation des résines polyester

On utilise la résine polyester n° 2 telle que préparée à l'exemple comparatif ainsi que la résine polyester n° 13 dont les ingrédients sont indiqués ci-après:
- acide adipique 38,64 %
- anhydride phtalique 9,65 %
- "acides dimères" vendus sous la dénomination "PRIPOL 1022" par la Société "UNICHEMA" et présentant une composition de 80 % en dimères et de 20 % en trimères 19,30 %
- monoéthylèneglycol 15,17 %
- diéthylèneglycol 17,22 %
- catalyseur 0,02 %

L'indice d'acide doit être <2 et le nombre d'hydroxyle compris entre 50 et 60. La teneur en acides gras polymérisés de cette résine polyester est de 21,62 % en poids.

### B - Préparation du composé hydroxylé

On utilise les ingrédients suivants:
- résine polyester n° 13 79,65 %
- résine polyester n° 2 15,00 %
- monoéthylèneglycol 4,40 %
- tensio-actif consistant en une huile minérale vendue sous la dénomination "PLASTIC OIL 263" par la Société "WITCO CHEMICAL" 0,40 %
- diaza-1,4 bicyclo [2.2.2] octane 0,50 %
- eau 0,05 %

### C - Préparation du prépolymère

On utilise le même prépolymère que celui préparé à l'exemple 3.

### D - Préparation de l'élastomère

On procède comme indiqué au paragraphe D du mode opératoire général avec un rapport composé hydroxylé/prépolymère de 61/39.

### E - Mesure des propriétés mécaniques avant et après hydrolyse

On a obtenu les résultats suivants:

| | Avant hydrolyse | Après hydrolyse |
|---|---|---|
| Allongement à la rupture (%) | 575 | 850 |
| Charge à la rupture (MPa) | 11,7 | 5,4 |

On observe une conservation de 46,2 % de la charge à la rupture après hydrolyse, cette charge est toutefois supérieure à 5 MPa, ce qui fait que l'élastomère d'uréthanne ainsi obtenu est jugé satisfaisant.

### EXEMPLE 9

On prépare un élastomère contenant 9,4 % d'acides gras polymérisés.

### A - Préparation des résines polyester

On utilise la résine polyester n°13 telle que définie à l'exemple 8 et la résine polyester n°2 telle que définie à l'exemple comparatif.

### B - Préparation du composé hydroxylé

On utilise les ingrédients suivants:
- résine polyester n° 13 78,05 %
- résine polyester n°2 14,70 %
- monoéthylèneglycol 6,30 %
- tensio-actif consistant en une huile minérale vendue sous la dénomination "PLASTIC OIL 263" par la Société "WITCO CHEMICAL" 0,40 %
- diaza-1,4 bicyclo [2.2.2] octane 0,50 %
- eau 0,05 %

### C - Préparation du prépolymère

On utilise le même prépolymère que celui défini à l'exemple 3.

### D - Préparation de l'élastomère d'uréthanne

On procède comme indiqué au paragraphe D du mode opératoire général avec un rapport composé hydroxylé/prépolymère de 55,9/44,1.

### E - Mesure des propriétés mécaniques avant et après hydrolyse

On a obtenu les résultats suivants:

| | Avant hydrolyse | Après hydrolyse |
|---|---|---|
| Allongement à la rupture (%) | 550 | 700 |
| Charge à la rupture (MPa) | 19,7 | 7,2 |

On observe une conservation de 36,5 % de la charge à la rupture après hydrolyse, mais cette charge et toutefois supérieure à 5 MPa, ce qui fait que l'élastomère d'uréthanne ainsi obtenu peut être estimé satisfaisant du point de vue de sa résistance à l'hydrolyse.

### EXEMPLE 10

On prépare un élastomère contenant 7,9 % d'acides gras polymérisés.

### A - Preparation de la résine polyester

On utilise la résine polyester n° 4, dont la formulation est donnée à l'exemple 1, ce polyester contenant 11,8 % en poids d'acides gras polymérisés.

### B - Préparation du composé hydroxylé

On utilise un composé hydroxylé qui est uniquement constitué par un agent d'allongement de chaîne, à savoir le butanediol-1,4.

### C - Préparation du prépolymère

On utilise les ingrédients suivants:
- résine polyester n°4 71,4 %
- 4,4'-diphénylméthane diisocyanate 28,6%

La teneur en groupements NCO doit être égale à 6,6 ± 0,15 % en poids.

### D - Preparation de l'élastomère d'uréthanne

On procède comme indiqué au paragraphe D du mode opératoire général avec un rapport composé hydroxylé/prépolymère de 6,5/93,5.

### E - Mesure des propriétés mécaniques avant et après hydrolyse

On a obtenu les résultats suivants:

| | Avant hydrolyse | Après hydrolyse |
|---|---|---|
| Allongement à la rupture (%) | 550 | 700 |
| Charge à la rupture (MPa) | 48 | 32 |

On constante que la charge à la rupture est conservée à raison de 66,6 % après l'hydrolyse, ce qui est jugé satisfaisant.

## Revendications

1. Procédé pour améliorer la résistance à l'hydrolyse d'un élastomère d'uréthanne saturé, ledit élastomère étant préparé par réaction d'un composé hydroxylé avec un prépolymère, le rapport en poids composé hydroxylé/prépolymère étant compris entre 5/95 et 95/5, ledit composé hydroxylé consistant :
- soit en au moins un agent d'allongement de chaîne ;
- soit en au moins une résine polyester saturée en présence d'additifs usuels ;
- soit en un mélange d'au moins un agent d'allongement de chaîne et d'au moins une résine polyester saturée en présence d'additifs usuels ; chaque agent d'allongement de chaîne et chaque résine polyester renfermant au moins deux fonctions hydroxyle terminales, ledit prépolymère étant préparé par réaction d'au moins une résine polyester saturée renfermant au moins deux fonctions hydroxyle terminales et d'au moins un isocyanate organique de fonctionnalité au moins égale à 2, le (ou les) isocyanate(s) étant en excès molaire par rapport à la (ou aux) résine(s) polyester, chacune des résines polyester étant préparée par réaction d'au moins un polyacide sur au moins un polyol, caractérisé par le fait que l'on remplace, pour la préparation d'au moins l'une des résines polyester, une fraction du (ou des) polyacide(s) par au moins un acide gras polymérisé essentiellement constitué d'un mélange de dimère et de trimère contenant 4 à 25 % en poids de trimère, la charge initiale totale en acide(s) gras polymérisé(s) étant comprise entre 4 et 25 % en poids, ces pourcentages étant ramenés au produit fini.

2. Procédé selon la revendication 1, caractérisé par le fait qu'on utilise un acide gras polymérisé renfermant 80 % en poids environ de dimère et 20 % en poids environ de trimère.

3. Procédé selon les revendications 1 ou 2, caractérisé par le fait que l'on choisit les acides gras polymérisés dans le groupe constitué par les dimères et trimères de monoacides aliphatiques insaturés ayant de 8 à 24 atomes de carbone, et leurs mélanges entre eux.

4. Procédé selon la revendication 3, caractérisé par le fait que l'on introduit les acides gras polymérisés sous la forme d'acides gras dimères et trimères qui sont obtenus par fractionnement d'acides gras polymérisés ou de mélanges d'acides gras polymérisés, et qui contiennent, en poids, moins de 1,5 % environ de monomères.

5. Procédé selon la revendication 4, caractérisé par le fait que l'on introduit des acides gras polymérisés sous forme d'une composition polymère qui est issue d'un mélange d'acides gras insaturés contenant en moyenne 18 atomes de carbone et qui renferme :
- de 0 à 1,5 % en poids de monomères,
- de 80 à 96 % en poids de dimères, et
- de 4 à 20 % en poids de trimères.

6. Procédé selon l'une des revendications 1 à 5, caractérisé par le fait que l'on choisit un rapport en poids composé hydroxylé / prépolymère de l'ordre de 60 / 40.

7. Procédé selon l'une des revendications 1 à 6, caractérisé par le fait que l'on met en oeuvre des résines polyester dont l'indice d'acide est inférieur à 2 et l'indice d'hydroxyle est compris entre environ 25 et 230.

8. Procédé selon l'une des revendications 1 à 7, caractérisé par le fait que l'on met oeuvre un prépolymère dont la teneur en groupements isocyanate se situe entre 2 et 25 % en poids.

9. Compositions pour la mise en oeuvre du procédé tel que défini à l'une des revendications 1 à 8, ces compositions consistant en :
- au moins une résine polyester saturée renfermant au moins deux fonctions hydroxyle terminales et formulée à partir d'au moins un polyacide et d'au moins un polyol ;
- un composé hydroxylé consistant :
- soit en au moins un agent d'allongement saturé de chaîne,
- soit en au moins l'une desdites résines polyester en présence d'additifs usuels,
- soit en un mélange d'au moins un agent d'allongement saturé de chaîne et d'au moins l'une desdites résines polyester en présence d'additifs usuels; chaque agent d'allongement de chaîne renfermant au moins deux fonctions hydroxyle terminales ; et
- un prépolymère formulé à partir d'au moins l'une desdites résines polyester et d'au moins un isocyanate organique de fonctionnalité au moins égale à 2, le(ou les) isocyanate(s) étant en excès molaire par rapport à la (ou aux) résine(s) polyester,
ledit composé hydroxylé et ledit prépolymère constituant les ingrédients de la formulation de l'élastomère d'uréthanne que l'on veut obtenir, ces ingrédients étant utilisés dans un rapport en poids compris entre 5/95 et 95/5, caractérisées par le fait qu'au moins l'une des résines polyester comporte, dans sa formulation, au moins un acide gras polymérisé essentiellement constitué d'un mélange de dimère et de trimère contenant 4 à 25 % en poids de trimère, la charge initiale totale en acide(s) gras polymérisé(s) étant comprise entre 4 et 25 % en poids, ces pourcentages étant ramenés au produit fini.

10. Compositions selon la revendication 9, caractérisées par le fait que l'acide gras polymérisé renferme 80 % en poids environ de dimère et 20 % en poids environ de trimère.

11. Compositions selon l'une des revendications 9 ou 10, caractérisées par le fait que les acides gras polymérisés sont choisis dans le groupe constitué par les dimères et trimères de monoacides aliphatiques insaturés ayant de 8 à 24 atomes de carbone, et leurs mélanges entre eux.

12. Compositions selon la revendication 11, caractérisées par le fait que les acides gras polymérisés sont présents dans la formulation du (ou des) polyesters sous la forme d'acides gras dimères et trimères qui sont obtenus par fractionnement d'acides gras polymérisés ou de mélange d'acides gras polymérisés et qui contiennent, en poids, moins de 1,5 % environ de monomères.

13. Compositions selon la revendication 12 , caractérisées par le fait que les acides gras polymérisés sont présents, dans la formulation du (ou des) polyester(s) sous forme d'une composition polymère qui est issue d'un mélange d'acides gras insaturés contenant en moyenne 18 atomes de carbone et qui renferme :
- de 0 à 1,5 % en poids de monomères ;
- de 80 à 96 % en poids de dimères ; et
- de 4 à 20 % en poids de trimères.

14. Elastomère d'uréthanne présentant une résistance améliorée à l'hydrolyse et obtenu par le procédé tel que défini à l'une des revendications 1 à 8.

## Patentansprüche

1. Verfahren zur Verbesserung der Hydrolysebeständigkeit eines gesättigten Polyurethan-Elastomeren, welches durch Umsetzung einer Hydroxylverbindung mit einem Prepolymeren im Gewichtsverhältnis Hydroxylverbindung/Prepolymer zwischen 5/95 und 95/5 hergestellt wurde, wobei die Hydroxylverbindung besteht aus
- mindestens einem Kettenverlängerungsmittel; oder
- mindestens einem gesättigten Polyesterharz in Gegenwart eines üblichen Additivs, oder
- einer Mischung aus mindestens einem Kettenverlängerungsmittel und mindestens einem gesättigten Polyesterharz in Gegenwart üblicher Additive,
wobei jedes Kettenverlängerungsmittel und jedes Polyesterharz mindestens 2 enständige Hydroxygruppen enthält, das genannte Prepolymer durch Umsetzung mindestens eines gesättigten Polyesterharzes mit mindestens zwei endständigen Hydroxylgruppen mit mindestens einem organischen Isocyanat der Funktionalität mindestens 2 hergestellt ist, das (oder die) Isocyanat(e) in bezug auf das (oder die) Polyesterharz(e) im molaren Überschuß vorliegt (vorliegen) und jedes der Polyesterharze durch Einwirkung mindestens einer Polysäure auf mindestens ein Polyol hergestellt wurde, dadurch gekennzeichnet,
daß man zur Herstellung mindestens eines Polyesterharzes einen Teil der Polysäure(n) durch zumindest eine polymerisierte Fettsäure ersetzt, die im wesentlichen aus einer Mischung aus Dimeren und Trimeren besteht mit einem Gehalt von 4 bis 25 Gew.% Trimeren, wobei der anfängliche Gesamteinsatz an polymerisierter(n) Fettsäure(n) Zwischen 4 und 25 Gew.%, bezogen auf das Endprodukt, liegt.

2. Verfahren nach Anspruch 1, dadurch gekennzeichnet,
daß man eine polymerisierte Fettsäure verwendet, die etwa 80 Gew.% Dimere und etwa 20 Gew.% Trimere enthält.

3. Verfahren nach einem der Ansprüche 1 oder 2, dadurch gekennzeichnet,
daß man die polmerisierten Fettsäuren auswählt aus der Gruppe bestehend aus den Dimeren und Trimeren der ungesättigten aliphatischen Monosäuren mit 8 bis 24 Kohlenstoffatomen und den Mischungen derselben.

4. Verfahren nach Anspruch 3, dadurch gekennzeichnet,
daß man die polymerisierten Fettsäuren in Form der dimeren und trimeren Fettsäuren einbringt, die durch Fraktionierung der polymerisierten Fettsäuren oder der Mischungen polymerisierter Fettsäuren erhalten werden und, bezogen auf das Gewicht, weniger als etwa 1,5% Monomere enthalten.

5. Verfahren nach Anspruch 4, dadurch gekennzeichnet,
daß man die polymerisierten Fettsäuren in Form einer Polymerzusammensetzung einbringt, die aus einer Mischung ungesättigter Fettsäuren stammt, die im Mittel 18 Kohlenstoffatome enthält und umfaßt:
- 0 - 1,5 Gew.% Monomere,
- 80 - 96 Gew.% Dimere und
- 4 - 20 Gew.% Trimere.

6. Verfahren nach einem der Ansprüche 1-5, dadurch gekennzeichnet,
daß man ein Gewichtsverhältnis Hydroxylverbindung/Prepolymer in der Größenordnung von 60/40 wählt.

7. Verfahren nach einem der Ansprüche 1-6, dadurch gekennzeichnet,
daß man Polyesterharze einsetzt, deren Säureindex unter 2 liegt und deren Hydroxylindex zwischen 25 und 230 beträgt.

8. Verfahren nach einem der Ansprüche 1-7, dadurch gekennzeichnet,
daß man ein Prepolymer einsetzt, dessen Gehalt an Isocyanatgruppen zwischen 2 und 25 Gew.% liegt.

9. Zusammensetzungen zur Durchführung des Verfahrens nach einem der Ansprüche 1-8, welche Zusammensetzungen bestehen aus:
- mindestens einem gesättigten Polyesterharz, das mindestens zwei endständige Hydroxylfunktionen enthält und ausgehend von mindestens einer Polysäure und mindestens einem Polyol gebildet ist;
- einer Hydroxylverbindung bestehend aus:
- mindestens einem gesättigten Kettenverlängerungsmittel; oder
- mindestens einem der genannten Polyesterharze in Gegenwart üblicher Additive; oder
- einer Mischung von mindestens einem gesättigten Kettenverlängerungsmittel und mindestens einem der genannten Polyesterharze in Gegenwart üblicher Additive, wobei jedes Kettenverlängerungsmittel mindestens zwei endständige Hydroxylgruppen enthält; sowie
- einem Prepolymer, das ausgehend von mindestens einem der genannten Polyesterharze und mindestens einem organischen Diisocyanat der Funktionalität mindestens 2 formuliert ist, wobei das (die) Diisocyanat(e) in molarem Überschuß in bezug auf das (die) Polyesterharz(e) vorliegt(vorliegen),
die genannte Hydroxylverbindung und das genannte Prepolymer die Bestandteile für die Formulierung des gewünschten Urethan-Elastomeren darstellen, wobei diese Bestandteile in einem Gewichtsverhältnis zwischen 5/95 und 95/5 eingesetzt werden, dadurch gekennzeichnet, daß mindestens eines der Polyesterharze in seiner Formulierung mindestens eine polymerisierte Fettsäure enthält, die im wesentlichen aus einer Mischung aus Dimeren und Trimeren besteht mit einem Gehalt von 4 bis 25 Gew.% Trimeren und daß der anfängliche Gesamteinsatz an polymerisierter(n) Fettsäure(n) zwischen 4 und 25 Gew.%, bezogen auf das Endprodukt, liegt.

10. Zusammensetzungen nach Anspruch 9, dadurch gekennzeichnet,
daß die polymerisierte Fettsäure etwa 80 Gew.% Dimere und etwa 20 Gew.% Trimere enthält.

11. Zusammensetzungen nach einem der Ansprüche 9 oder 10, dadurch gekennzeichnet,
daß die polymerisierten Fettsäuren ausgewählt sind aus der Gruppe bestehend aus den Dimeren und Trimeren der ungesättigten aliphatischen Monocarbonsäuren mit 8 bis 24 Kohlenstoffatomen sowie deren Mischungen.

12. Zusammensetzungen nach Anspruch 11, dadurch gekennzeichnet,
daß die polymerisierten Fettsäuren in der Formulierung des (der) Polyester(s) in Form der dimeren und trimeren Fettsäuren vorliegen, die durch Fraktionierung der polymerisierten Fettsäuren oder von Mischungen polymerisierter Fettsäuren erhalten wurden und, bezogen auf das Gewicht, weniger als etwa 1,5% Monomere enthalten.

13. Zusammensetzungen nach Anspruch 12, dadurch gekennzeichnet,
daß die polymerisierten Fettsäuren in der Formulierung des (der) Polyester(s) in Form einer Polymerzusammensetzung vorliegen, die aus einer Mischung ungesättigter Fettsäuren stammt, die im Mittel 18 Kohlenstoffatome enthält und umfaßt:
- 0 - 1,5 Gew.% Monomere;
- 80 - 96 Gew.% Dimere; und
- 4 - 20 Gew.% Trimere.

14. Urethan-Elastomere mit einer verbesserten Hydrolysebeständigkeit, die nach dem Verfahren nach einem der Ansprüche 1-8 hergestellt sind.

## Claims

1. A process for improving the hydrolysis resistance of a saturated urethane elastomer, said elastomer being prepared by reaction of a hydroxylated compound with a prepolymer, the ratio by weight of hydroxylated compound to prepolymer being between 5/95 and 95/5, said hydroxylated compound consisting of:
- at least one chain extender, or
- at least one saturated polyester resin in the presence of conventional additives, or
- a mixture of at least one chain extender and at least one saturated polyester resin in the presence of conventional additives,
each chain extender and each polyester resin containing at least two terminal hydroxyl groups, said prepolymer being prepared by reaction of at least one saturated polyester resin containing at least two terminal hydroxyl groups and at least one organic isocyanate having a functionality of at least 2, the isocyanate(s) being in a molar excess relative to the polyester resin(s), each of the polyester resins being prepared by reaction of at least one polyacid with at least one polyol, characterised in that, for the preparation of at least one of the polyester resins, a fraction of the polyacid(s) is replaced by at least one polymerized fatty add essentially constituted by a mixture of dimer and trimer containing from 4 to 25% by weight of trimer, the total initial charge of polymerized fatty acid(s) being between 4 and 25% by weight, these percentages being based on the final product.

2. A process according to claim 1, characterised in that a polymerized fatty acid containing about 80% by weight of dimer and about 20% by weight of trimer is used.

3. A process according to one of claims 1 and 2, characterised in that polymerized fatty adds in the group constituted by the dimers and trimers of unsaturated aliphatic monoacids containing from 8 to 24 carbon atoms and mixtures thereof are selected.

4. A process according to claim 3, characterised in that the polymerized fatty acids are introduced in the form of dimeric and trimeric fatty acids which are obtained by fractionating polymerized fatty acids, or of mixtures of polymerized fatty acids, and comprise less than approximately 1.5% by weight of monomers.

5. A process according to daim 4, characterised in that the polymerized fatty acids are introduced in the form of a polymeric composition which results from a mixture of unsaturated fatty acids comprising on average 18 carbon atoms and contains:
- from 0 to 1.5% by weight of monomers
- from 80 to 96% by weight of dimers and
- from 4 to 20% by weight of trimers

6. A process according to one of claims 1 to 5, characterised in that a ratio by weight of hydroxylated compound to prepolymer of the order of 60/40 is selected.

7. A process according to one of claims 1 to 6, characterised in that polyester resins having an acid value of less than 2 and a hydroxyl value of between about 25 and 230 are used.

8. A process according to one of claims 1 to 7, characterised in that a prepolymer, the isocyanate group content of which is between 2 and 25% by weight, is used.

9. Compositions for carrying out the process as defined in one of claims 1 to 8, these compositions consisting of
- at least one saturated polyester resin containing at least two terminal hydroxyl groups and being formulated from at least one polyacid and at least one polyol
- a hydroxylated compound consisting of
- at least one saturated chain extender, or
- at least one of said polyester resins in the presence of conventional additives, or
- a mixture of at least one saturated chain extender and at least one of said polyester resins in the presence of conventional additives, each chain extender containing at least two terminal hydroxyl groups, and
- a prepolymer formulated from at least one of said polyester resins and at least one organic isocyanate having a functionality of at least 2, the isocyanate(s) being in a molar excess relative to the polyester resin(s),
said hydroxylated compound and said prepolymer constituting the ingredients of the urethane elastomer formulation to be obtained, these ingredients being used in a ratio by weight of between 5/95 and 95/5, characterised in that at least one of the polyester resins includes, in its formulation, at least one polymerized fatty acid essentially constituted by a mixture of dimer and trimer containing from 4 to 25 % by weight of trimer, the total initial charge of polymerized fatty acid(s) being between 4 and 25% by weight, these percentages being based on the final product.

10. Compositions according to claim 9, characterised in that the polymerized fatty acid contains about 80% by weight of dimer and about 20% by weight of trimer.

11. Compositions according to one of claims 9 or 10, characterised in that the polymerized fatty acids are selected from the group constituted by the dimers and trimers of unsaturated aliphatic monoacids containing from 8 to 24 carbon atoms and mixtures thereof.

12. Compositions according to claim 11, characterised in that the polymerized fatty acids are present in the formulation of the polyester(s) in the form of dimeric and trimeric fatty acids, which are obtained by fractionating polymerized fatty acids, or of mixtures of polymerized fatty acids, and comprise less than about 1.5% by weight of monomers.

13. Compositions according to claim 12, characterised in that the polymerized fatty acids are present, in the formulation of the polyester(s), in the form of a polymeric composition which results from a mixture of unsaturated fatty acids comprising on average 18 carbon atoms and contains:
- from 0 to 1.5% by weight of monomers
- from 80 to 96% by weight of dimers and
- from 4 to 20% by weight of trimers.

14. A urethane elastomer which has improved hydrolysis resistance and is obtained by the process as defined in one of claims 1 to 8.
